# EUROPEAN PATENT APPLICATION

(11) **EP 4 625 148 A1**
(43) Date of publication of application: **01.10.2025**
(21) Application number: 24166895.3
(22) Date of filing: 27.03.2024
(51) Int. Cl.: G06F 8/33, G06N 20/00

(54) **COMPUTER-IMPLEMENTED METHOD FOR GENERATING AN APPLICATION AND APPLICATION GENERATOR**

(71) Applicant: Siemens Aktiengesellschaft, 80333 München (DE)
(72) Inventor: Sauer, Markus, 81739 München (DE); Zalewski, Lukasz, 80469 München (DE)
(74) Representative: Siemens Patent Attorneys

(57) **Abstract**

The computer-implemented method for generating an application (A), comprises the steps of receiving an application task (DDA), splitting the application task into at least two or more functions using a first large language model (LDE), generating the functions using a second large language model (LFB) and generating the application (GFWFCET) involving linking the functions together.

The application generator is configured to carry out this method.

## Description

Serverless computing is a novel computing paradigm, that allows developers to easily design and implement applications and later deploy them automatically, without having to worry about provisioning appropriate compute platforms and setting up required network connections. Serverless computing is especially well-suited for event-driven architectures. Currently, serverless developer defines his code as a set of functions with defined inputs (for function invocations) and outputs (for results delivery) and uploads it to a service which takes care of deploying it. The functions can then be triggered and executed by client requests and the platform takes care of scaling up and down as required, based on the current usage. This saves costs, as the user is only billed for the time during which functions were executed.

Existing tools like AWS step-functions (https://aws.amazon.com/step-functions/) allow developers to compose sequences of serverless functions, with conditional control and additional logic and to integrate them into existing business applications, by using visual compositors provided (low-code environments). These sequences of functions are then also referred to as workflows. Modern serverless platforms also allow to define certain constraints (e.g., where a given function is allowed to run / what are the latency requirements / which hardware is needed) on functions and workflows, which are then considered during the function orchestration process (like e.g. in the EDGELESS project https://edgeless-proiect.eu).

Low-code environments (such as Mendix (https://www.mendix.com/), or in the serverless computing world - AWS step functions (https://aws.amazon.com/de/step-functions/)) - offer a unique way for non-developers to bootstrap complex business applications, tailored to their custom needs, without the need of engaging an application developer. Yet the way today's low-code environments work as visual tools, still requires significant knowledge about the underlying systems and infrastructure to build an application and to configure all necessary constraints, parameters, and connections.

Thus, it is the problem of the invention to improve the process of developing industrial applications and to provide an improved method and application generator for generating the code of such applications.

Such an approach should enable rapid prototyping and implementation of custom tooling and distributed applications, without the need to learn about custom protocols, domain specific languages, potentially coding and application development principles at all. Moreover, the users could then just simply reuse the tool at any time in the future since the defined application would remain available on the serverless platform.

The problem is solved with a method comprising the features contained in claim 1. Further aspects of the invention are contained in the respective dependent claims, the following description and the drawing.

The computer-implemented method for generating an application according to the invention receives an application task, splits it into multiple functions using a first large language model, generates the functions using a second large language model, and links them together to form the application. This enables efficient application generation, automating the development process and saving time and effort. Additionally, the unified platform combines existing ideas (LLM + serverless) and extends low-code platforms with a more intuitive natural language interface, providing users with an easy-to-use tool for distributed application development.

This invention addresses the challenges faced by non-developers in constructing serverless applications. While existing approaches in serverless computing have removed the mental cost of worrying about deployment and operations, the process of writing code, defining the application, and testing for intended behavior remains a major hurdle. However, with the novel method described above, users can now define the functionality of an application through a natural language conversation with a large-language model (LLM) in an interactive manner. This provides a simplified approach to serverless application development.

Unlike existing low-code approaches that do not provide a natural way of defining an application for non-developers, the proposed system allows users to define the functionality of an application through a natural language conversation with an LLM. This intuitive interface enables non-developers to easily specify their application requirements, eliminating the need for them to have coding expertise.

The novel combination of an LLM as the new low-code environment, together with the serverless computing platform, allows for the definition and implementation of dynamic and scalable distributed applications. The LLM facilitates the generation of process workflows, its configurations, code and functions, while the serverless platform ensures the correct and automatic deployment of the application into a distributed and heterogeneous computing environment. This integrated approach solves two problems simultaneously, making application development more efficient and effective.

With the method according to the invention, the deployment and scaling of serverless applications become seamless and automated. By leveraging the capabilities of the serverless platform, the invention ensures that the application is deployed correctly into the distributed computing environment considering respective application and function constraints without the need for manual intervention. This saves time and effort for developers, enabling them to focus more on the core functionality of the application.

With the method according to the invention and thus with providing a natural language interface and simplifying the process of serverless application development, the invention makes it more accessible for non-developers to actively participate in defining and implementing applications. This democratizes the distributed applications development process and opens up opportunities for a wider range of users to create their own distributed applications.

In an advantageous aspect of the method according to the invention, generating the application involves connecting the functions to external triggers. This allows for seamless integration with external systems or events, enhancing the functionality and versatility of the application. Moreover, the method according to the invention combines existing ideas (LLM + serverless) into a unified platform, offering an even more intuitive interface and removing the steep learning curve associated with existing low-code platforms.

In an advantageous aspect, the method according to the invention involves defining of test scenarios for the application. This enables systematic testing of the application's behavior in different situations, ensuring its reliability and performance. Users can also leverage the interactive nature of a natural language conversation system to interactively check for edge cases and correctness, allowing for easy verification of the application's behavior correctness.

The method according to the invention advantageously includes generating test cases for the defined test scenarios. This automates the process of creating test cases, saving time and ensuring comprehensive testing coverage. Furthermore, the method according to the invention allows for the interactive review of the executed test cases, generating a safety and/or security assessment, which aids in identifying vulnerabilities and enhancing the robustness of the application.

The method according to the invention advantageously involves executing the generated test cases with the application. It facilitates the validation and verification of the application's behavior, identifying any potential issues or bugs. Additionally, the method according to the invention solves the problem of verification by interactively checking for edge cases and correctness, enabling users to verify if the developed application aligns with their intentions.

The method according to the invention advantageously involves interactively reviewing the results of the executed test cases and generating a safety and/or security assessment. This enables the identification of safety or security vulnerabilities and the adaptation of the application to address them, ensuring the application's robustness. The method according to the invention also allows users to revisit the application and rapidly fix any errors or bugs, promoting prompt updates and adaptation to changing requirements or environment conditions.

The method according to the invention advantageously involves generating test cases using a third large language model. It enhances the accuracy and effectiveness of the test case generation process, improving the quality of the testing phase. The method according to the invention combines multiple existing ideas (LLM + serverless) into a unified platform, leveraging the advantages of both to provide accurate and comprehensive test case generation.

The method according to the invention advantageously involves receiving the application task through a dialogue using a fourth large language model that interactively demands answers. This provides a user-friendly and intuitive interface for specifying application requirements, making the development process more accessible. The method according to the invention extends low-code platforms with an even more intuitive natural language interface, allowing users to start building applications right away without the need to familiarize themselves with a low-code platform first.

The method according to the invention advantageously involves generating control applications for manufacturing, processing, or logistics steps. This enables the automation of control systems, improving efficiency and accuracy in these domains. Additionally, and advantageously, the method according to the invention may respect data privacy and security concerns by using an on-premises serverless platform together with a local deployment of an open-sourced large language model, ensuring the confidentiality and integrity of the data.

The application generator according to the invention includes a user interface for receiving the application task, a task analyzer for splitting the task into functions using a first large language model, a functions generator for generating the functions using a second large language model, and an application linker for linking the functions together. It provides a comprehensive toolset for application development, streamlining the process and making it more accessible.

Additionally, the proposed system extends low-code platforms with a more intuitive natural language interface, allowing users to easily specify application requirements and accelerate the development process.

In a preferred aspect of the invention, the application generator according to the invention further includes a test generator that defines test scenarios, generates test cases, and executes them with the application. This automates the testing process, ensuring thorough testing coverage and enabling early detection of issues. Users can leverage the interactive nature of the system to review the results of the executed test cases, facilitating the analysis of test results and ensuring the quality and reliability of the application.

In a preferred aspect of the invention, the application generator also includes a review module that interactively reviews the results of the test cases. It facilitates the analysis of test results, allowing for prompt identification of any issues or areas of improvement. Moreover, if a bug or an error is discovered later, after the application has already been deployed, the user can revisit it and, in a rapid fashion, fix the error by prompting the system, which remembers the previous interactions by keeping their context persisted. This allows for quick updates and maintenance of older versions of applications, ensuring adaptability and responsiveness to changing requirements or environment conditions.

The invention is described in more detail with the help of the drawings.
- Figure 1: shows an application generator system according to the invention for carrying out a method according to the invention schematically as a diagrammatic drawing.
- Figure 2: shows the method according to the invention schematically with a diagrammatic drawing.

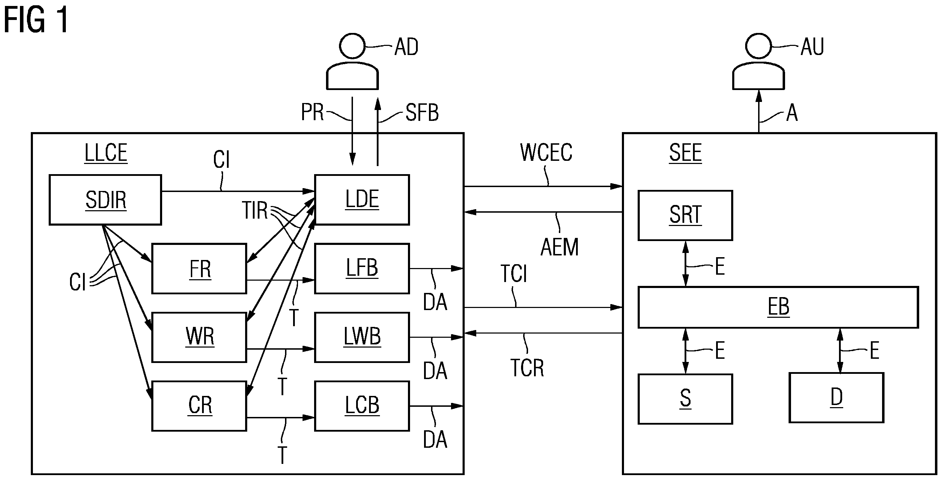

The proposed application generator as shown in figure 1 combines the capabilities of LLMs and serverless computing platforms to provide an interactive and natural way of defining complex distributed applications.

A very simple, interactive example dialog for application development could look as follows:

| User | LLM assistant | Information extracted from the conversation |
|---|---|---|
| U#1: "Create an application which reads all temperature | | |
| sensors in the Factory Hall B10, persists the values and displays them live as a moving average on a dashboard and makes the dashboard available to share with other people in our intranet" | | |
| | DE#1: Sure, no problem. Should I store the data in our database "Telemetry Data" or should I create a new dedicated Database in our on-premise Cloud? | - Task #1: Generate a function f1, which generates a moving average. Inputs are temperature read events; output is a moving average. |
| | | This function is stateful. |
| | | - Task #2: Generate a function f2 which stores temperature events. |
| | | - Info #1: Functions are invoked by temperature events based on sensors in Factory Hall B10 |
| | | - Info #2: A dashboard needed to show the moving average live. |
| | | - Info #3: A place to store the dashboard and data is needed. |
| U#2: Use the "Telemetry Data" Database with a specific table "Temperatures_FHB10". | | |
| | DE#2: Ok. Who should have access to this database? Should I copy the general rights from the Telemetry | - Task #3: Create a table "Temperatures_FHB10" in the "Telemetry Data" database. |
| | Database or do you want a specific group? | - Task #4: Add this table as an output sink to F2, to store the data. |
| U#3: Reuse the access rights from the general database. | | |
| | DE#3: Ok, will do. Should I use all temperature sources in Factory Hall B10 or only a specific group like for instance the T100 sensors connected to our environmental monitoring databus? | - Task #5: Reuse the rights to the "Temperatures_FHB10" table |
| U#4: Only use the T100 sensors. | | |
| | DE#4: Ok will do. Which Dashboard should I use for visualizing the moving average? We have a Dashboard "Factory Hall B10" which is used to visualize environmental data in Factory Hall B10. Should I use this? Should I create an additional widget there? | - Tasks #6: Register F1 and F2 to sensor events "temperature" from "T100 sensors" in "Factory Hall B10" as function invocation events. |
| U#5: Yes. | | |
| | DE#5: Ok, thanks. I have all information now. I will create now first the necessary auxiliary services like the dashboard and the database. Then I will use my Function and Workflow Builder to create Functions and Workflows for | - Task #7: Generate a Widget on Dashboard "Factory Hall B10" showing the moving average. |
| | | - Task #8: Add the Dashboard Widget to F1 as the result sink. |
| | calculating the moving average and storing the temperature in the Telemetry database. Finally, I will interconnect the different components via the Events you defined. | |
| | While I am doing this, I show you a structural overview of your defined application. If you like we can define a set of Test Cases to Test your application in an automated manner before we deploy this application to our production environment. | |
| | Would you like to do so? I can also show you the generated code if you want me to. Finally, take a look at this generated system diagram and make sure that all of the connections are as required. | |
| | If anything is missing, please let me know. | |
| *To be continued in a similar manner for test* cases *definition.* | *To be continued in a similar manner for test* cases *definition.* | *To be continued in a similar manner for test* cases *definition.* |

The application generator system shown in Fig. 1 consists of various components, including an LLM-based low-code environment LLCE comprising a service and device information repository SDIR, a function reasoning module FR, a workflow reasoning module WR, a configuration reasoning module CR, an LLM-based dialog engine LDE, an LLM-based function builder LFB, an LLM-based workflow builder LWB, an LLM-based configuration builder LCB. The application generator system also comprises of a serverless execution environment SEE with a serverless runtime on a compute cluster SRT, an event bus EB and is connected to external services S and devices D. The LLM-based dialog engine LDE receives the tasks for building an application A from the application developer AD and splits the development task of the application developer AD into a set of interconnected functions and thus defines the overall architecture of the application A.

The LLM-based low-code environment LLCE interacts with its LLM-based dialog engine LDE with the application developer AD through prompts PR and status feedback SFB to derive specific implementation and setup tasks for the application A. The service and device information repository SDIR provides the necessary context information to the LLM-based dialog engine LDE including available services, configurations, devices, and execution environment.

The function reasoning module FR, the workflow reasoning module WR and the configuration reasoning module CR and the LLM-based function builder LFB generate necessary implementations of serverless functions, workflows, configurations and environment configurations WCEC based on inputs from the function reasoning module RF, the workflow reasoning component WR and the configuration reasoning component CR and information from the SDIR. The CR and LCB generate configuration artifacts for the serverless execution environment SEE. The service and device information repository SDIR also provides context information CI to the function reasoning module FR, the workflow reasoning module WR and the configuration reasoning module CR. The function reasoning module RF triggers the LLM-based function builder LFB with a task T. Likewise, the workflow reasoning module WR, triggers the LLM-based workflow builder LWB with a task T and the configuration reasoning module CR triggers the LLM-based configuration builder LCB with a task T. The workflow reasoning component WR and the LLM-based workflow builder LWB each generate deployment artifacts DA that constitute implementations of serverless functions, workflows, configurations, and environment configurations WCEC to interconnect functions and serverless external systems. The LLM-based low-code environment LLCE provides these implementations of serverless functions, workflows, configurations, and environment configurations WCEC to the serverless execution environment SEE, that feeds back application execution metrics AEM to the LLM-based low-code environment LLCE.

The serverless runtime on compute cluster SRT of the serverless execution environment SEE acts as the serverless execution environment, executing functions, workflows, and configurations generated by the LLM-based low-code environment LLCE. It handles event forwarding, function invocation, system scaling, and result delivery to serverless external systems. Services/devices S/D are utilized as serverless external event sources and sinks in the defined application.

The system also supports interactive definition and generation of test case implementations TCI to validate the application A before deployment. It allows for the execution of infrastructure setup tasks and provides the aforementioned application execution metrics AEM. The test case implementations TCI are implemented on the serverless execution environment SEE and test case results TCR are fed back to the LLM-based low-code environment LLCE. The mutliple LLM models used in the system can be trained and prompted to ensure accurate and context-specific interactions.

The serverless runtime on compute cluster SRT of the serverless execution environment SEE reacts on events E and provides events E with the help of an event bus EB, that in turn exchanges events E with services S and devices D.

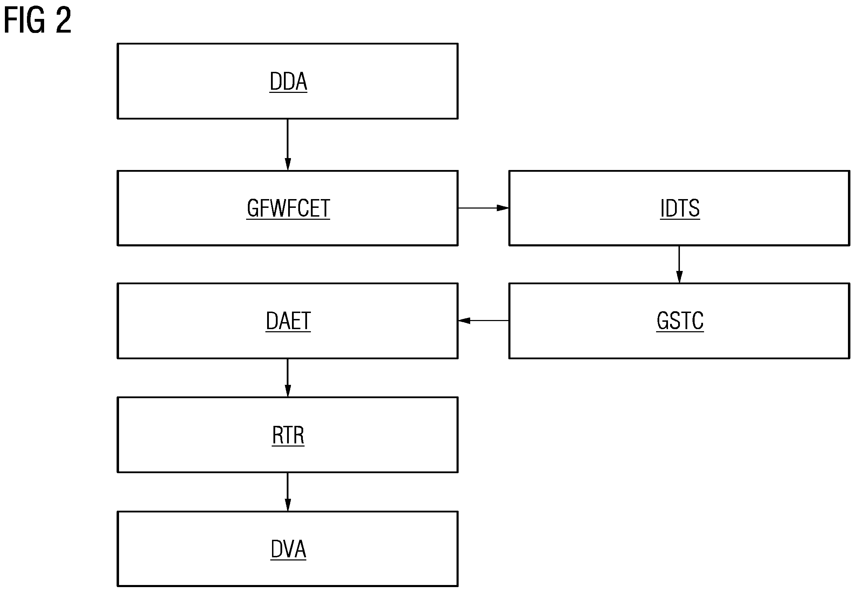

Figure 2 gives an overview of the interaction between the different components.

The steps visualized in Fig. 2 are as follows:

In a first step DDA, an application developer AD interactively defines a distributed application according to the serverless computing paradigm using the application generator system of Fig. 1.

In a further step GFWFCET functions are generated, interconnected into workflows and connected to external triggers and appropriate function constraints are attached.

In a subsequent step IDTS test scenarios are interactively defined.

The defined test scenarios are then generated as serverless test cases with the subsequent step GSTC.

The distributed application A and the generated test cases are then deployed in a further step DAET.

In the further step RTR the test scenario results are interactively reviewed and the application generator system is improved.

## Claims

1. Computer-implemented method for generating an application (A), comprising the steps of
- receiving an application task (DDA)
- splitting the application task into at least two or more functions using a first large language model (LDE),
- generating the functions using a second large language model (LFB) and
- generating the application (GFWFCET) involving linking the functions together.

2. Computer-implemented method according to claim 1, in which generating the application (GFWFCET) involves connecting the functions to external triggers (S, D).

3. Computer-implemented method according to one of the previous claims, in which test scenarios are defined for the application (A).

4. Computer-implemented method according to one of the previous claims, in which test cases (TCI) are generated for the test scenarios.

5. Computer-implemented method according to one of the previous claims, in which the test cases are executed with the application.

6. Computer-implemented method according to one of the previous claims in which results (TCR) of the executed test cases are interactively reviewed generating a safety and/or security assessment and in which the applications are adapted dependent on the safety and/or security assessment.

7. Computer-implemented method according to one of the previous claims, in which the test cases (TCI) are generated using a third large language model.

8. Computer-implemented method according to one the previous claims, in which the application task is received with a dialogue using a fourth large language model (LLDE), that interactively demands answers to application task questions.

9. Computer-implemented method according to one of the previous claims, in which the application (A) is a control application for controlling a manufacturing step or a processing step or a logistics step and the generated application is application is carried out for controlling the manufacturing step or the processing step or the logistics step.

10. Application generator, configured for carrying out the method for generating an application according to one of the previous claims, comprising:
- a user interface (LDE) for the receiving an application task
- a task analyser (LDE), implementing the first language model, splitting the application task into at least two or more functions using a first large language model,
- a functions generator (LFB), implementing a second large language model, generating the at least two or more functions,
- and a generation module generating (GFWFCET) the application involving linking the functions together.

11. Application generator according to one of the previous claims, further comprising a test generator that is configured to
- define at least one test scenario for the application.
- generate at least one test case (TCI) for the at least one test scenario and
- execute the at least one test case with the application.

12. Application generator according to one of the previous claims, further comprising a review module, that is configured to interactively review results (TCR) of the at least one test case.
